# EUROPÄISCHE PATENTSCHRIFT

(11) **EP 0 470 066 B1**
(45) Veröffentlichungstag und Bekanntmachung des Hinweises auf die Patenterteilung: **14.09.1994**
(21) Anmeldenummer: 91890163.8
(22) Anmeldetag: 25.07.1991
(51) Int. Cl.: C21C 5/56, C22B 1/00, C22B 7/00, C21C 5/42, F23G 5/08

(54) **Verfahren zum Erschmelzen von Stahl aus Schrott und/oder metallhaltigen, müllähnlichen Stoffen**
Process for melting steel from scrap and/or metal-containing waste material
Procédé pour la fusion d'acier à partir de ferrailles et/ou des immondices métallifères

(30) Priorität: 26.07.1990 AT 1569/90
(43) Veröffentlichungstag der Anmeldung: 05.02.1992
(73) Patentinhaber: Seirlehner, Leopold, Dipl.-Ing., A-4020 Linz (AT); Winkler, Manfred, A-4501 Neuhofen (AT)
(72) Erfinder: Nieder, Wolfgang, Dipl.Ing., A-4040 Linz (AT); Winkler, Manfred, A-4050 Traun (AT); Seirlehner, Leo, Dipl.Ing., A-4040 Linz (AT)
(74) Vertreter: Haffner, Thomas M., Dr.

(56) Entgegenhaltungen:
- EP-A- 0 030 344
- US-A- 2 382 534
- US-A- 3 529 067
- US-A- 3 529 067
- US-A- 4 931 013

## Beschreibung

Die Erfindung bezieht sich auf ein verfahren zum Erschmelzen von Stahl aus Schrott und/oder metallhaltigen, müllähnlichen Stoffen, wobei die kontinuierlich oder diskontinuierlich eingetragenen Metallträger in einem Festbett vorgewärmt und aufgeschmolzen werden sowie sauerstoffhältige Gase über wenigstens eine Sekundärdüsenebene im Bereich des Festbettes und/oder oberhalb des Festbettes eingedüst werden.

Zur Erzeugung einer flüssigen Stahlschmelze aus organisch oder anorganisch kontaminiertem Schrott sind eine Reihe von Verfahren bekannt geworden. So ist beispielsweise ein Verfahren der eingangs genannten Art der EP-A 0 030 344 zu entnehmen, wobei auf eine Verbesserung der Wärmeausnutzung bei der Stahlerzeugung aus festen Eisenmaterialien abgezielt wird. Hiebei erfolgt zur verbesserten Energieausnutzung die Sauerstoff- und Brennstoffzufuhr durch mindestens zwei in unterschiedlichen Höhen in der Seitenwand eines Konverters angeordnete Düsen in der Weise, daß während einer Vorheizzeit der festen Eisenmaterialien diese Düsen im Stahlbadbereich als Öl- und/oder Gas/Sauerstoff-Brenner betrieben werden.

Weiters sind Schrottschmelzverfahren, bei welchen Schrott bzw. weitgehend vorreduziertes Ausgangsmaterial in einen Wirbelschichtreaktor eingebracht wird und in der Wirbelschicht unter reduzierenden Bedingungen geschmolzen wird, in unterschiedlicher Ausbildung bekannt geworden, wobei bei derartigen Schrottschmelzverfahren insbesondere dann, wenn kontaminierter Schrott bzw. müllähnliche, metallhaltige Stoffe dem Schrott beigemengt sind, eine Reihe von die Umwelt belastenden Substanzen im Abgas gebildet werden. Zur Erzielung der Schmelzwärme ist es bekannt, Kohlestaubbrenner zu verwenden und bei der Verbrennung von Kohlen entstehen zumeist mehr oder minder hohe Schwefelgehalte im Abgas, wobei auch gasförmige Chlorverbindungen, insbesondere bei Verwendung von metallhaltigen, müllähnlichen Stoffen als Ausgangsmaterial in erheblichem Umfang im Abgas auftreten. Insgesamt ergibt sich bei den Bedingungen einer derartigen Verfahrensführung eine mehr oder minder große Belastung des Abgases mit halogenierten Kohlenwasserstoffen und im besonderen mit PCDD und PCDF. Derartige polychlorierte Dibenzodioxine bzw. Dibenzofurane weisen neben ihrer Toxizität die ungünstige Eigenschaft auf, daß sie auch bei thermischer Dechlorierung relativ rasch beim Abkühlen neu gebildet werden und sind daher in bezug auf ihre Beseitigung aus Abgasen überaus problematisch. Für die Abtrennung derartiger toxischer Substanzen sind eine Reihe von Filterverfahren bereits vorgeschlagen worden, wobei in der Folge ein hochtoxisches Filterprodukt anfällt, dessen Entsorgung wiederum auf große Schwierigkeiten stößt.

Die Erfindung zielt nun darauf ab, ein Verfahren der eingangs genannten Art, insbesondere auch für die Verwendung von metallhaltigen, müllähnlichen Stoffen als Ausgangspunkt vorzuschlagen, mit welchem die Beseitigung derartiger polychlorierter Dibenzodioxine und polychlorierter Dibenzofurane sowie anderer Schadstoffe aus dem Abgas leichter gelingt und welche es ermöglicht, metallhaltige, müllähnliche Stoffe gefahrlos als Ausgangsmaterial einzusetzen. Zur Lösung dieser Aufgabe besteht das erfindungsgemäße Verfahren im wesentlichen darin, daß das Abgas des Festbettreaktors einem Thermoreaktor, in welchem die in dem Abgas enthaltenen organischen Schadstoffe zersetzt werden, zugeführt wird und vor Eintritt in den Thermoreaktor auf Temperaturen von 1000°C bis 1500°C erhitzt wird, und daß das den Thermoreaktor verlassende Abgas über wenigstens ein Filter geleitet wird und einer chemischen Rauchgasreinigung unter-worfen wird, worauf das behandelte bzw. physikalisch oder chemisch vorgereinigte Rauchgas gegebenenfalls über ein Aktivkoksfilter endgereinigt wird. Bevorzugt wird hiebei so vorgegangen, daß das Abgas des Festbettreaktors auf Temperaturen von 1000°C bis 1200°C erhitzt wird. Dadurch, daß die kontinuierlich oder diskontinuierlich eingetragenen Metallträger in einem Festbett vorgewärmt und aufgeschmolzen werden, kann durch Regelung der Sauerstoffkonzentration und Einstellung der gewünschten Festbetthöhe dem Umstand Rechnung getragen werden, daß bei Einsatz von Metallträgern bzw. organischen Stoffen eine Reihe von exothermen Oxidationsreaktionen, wie Eisenabbrand sowie Aluminiumabbrand berücksichtigt werden, wobei insbesondere der Eisenabbrand über die Einstellung der Festbetthöhe, durch Erhöhung bzw. Verringerung der Kontaktzeiten beeinflußt werden kann. Gleichzeitig kann mit einer derartigen Erhöhung der Festbetthöhe in einem derartigen Reaktor das Verhältnis Primärenergie zum Gesamtenergieeinsatz eingestellt werden, wobei als Primärenergie gasförmige und/oder flüssige Brennstoffe oder auch Feststoffe eingesetzt werden können. Der Eisenabbrand kann schließlich durch Verringerung der Verbrennungsstöchiometrie und Einstellung der Verhältnisse auf Bedingungen einer Vergasung bis Bedingungen einer Verbrennung durch entsprechende Einstellung der Sauerstoff-zuführung geregelt werden, wobei insbesondere für den Einsatz von metallhaltigen, müllähnlichen Stoffen eine entsprechende Verfahrensführung mit dem Zweck, unerwünschte Schadstoffe aus den Abgasen leichter entfernen zu können, durch die Einstellung des Temperaturprofiles über den im Gegenstrom betriebenen Festbettreaktor erfolgen kann. Zu diesem Zweck werden erfindungsgemäß über wenigstens eine Sekundärdüsenebene sauerstoffhaltige Gase eingedüst. Dadurch, daß nun das Abgas des Festbettreaktors, d.h. das Prozeßgas auf Temperaturen von 1000°C bis 1500°C, insbesondere 1000 bis 1200°C, bei Bedarf durch Hilfsbrenner erhitzt wird, gelingt es in der Folge, die in dem Prozeßgas enthaltenen Schadstoffe in einem Thermoreaktor nahezu quantitativ zu zersetzen, so daß das den Thermoreaktor verlassende Abgas in der Folge zunächst zur Abtrennung von Feststoffen durch ein physikalisches Filter geleitet wird und einer chemischen Rauchgasreinigung unterworfen wird, worauf das von staubförmigen Stoffen, S0₂/S0₃, HCl und HF gereinigte Rauchgas gegebenenfalls über ein Aktivkoksfilter zur Endreinigung geführt wird, wobei insgesamt die Gefahr einer Rekombination von Dibenzodioxinen bzw. polychlorierten Dibenzofuranen durch Wahl der relativ hohen Temperaturen und durch die Anwendung des Thermoreaktors im Anschluß an den Festbettreaktor weitgehend verringert werden kann.

Die Beseitigung derartiger verbleibender und de novo synthetisierter polychlorierter Dibenzodioxine bzw. polychlorierter Dibenzofurane gelingt in der Folge mit konventionellen Aktivkoksfiltern und es ist daher gemäß einer bevorzugten Weiterbildung des erfindungsgemäßen Verfahrens vorgesehen, daß der Aktivkoks des Aktivkoksfilters ausgetragen und auf eine Korngröße von 50 bis 200 µm, insbesondere 100 bis 150 µm, gemahlen wird und in den Festbettreaktor eingedüst wird. Das mit Schadstoffen beladene Filtermaterial kann auf diese Weise in Kreislauf geführt werden und gleichzeitig zur Lieferung von Primärenergie im Einschmelzreaktor bzw. dem Festbettreaktor Verwendung finden.

Unter dem Begriff Festbettreaktor wird im vorliegenden Fall ein Reaktor verstanden, bei welchem Feststoffe entweder in einer stabilen Schicht oder in einer wanderenden Schicht durch den Reaktor bewegt werden. Als einfachste Form eines derartigen Festbettreaktors kommt ein Schachtofen in Betracht, jedoch können auch Drehrohröfen, Telleröfen oder Etagenöfen eingesetzt werden.

Schließlich zählen auch Wirbelschichtöfen und Flugstaubreaktoren zu den Festbettreaktoren, wobei auch mit derartigen Festbettreaktoren das gewünschte Temperaturprofil exakt eingestellt werden kann.

In besonders einfacher Weise kann zur Erzielung eines günstigen Temperaturprofiles für die nachfolgenden Abscheidungen oder nachfolgende Abscheidung der Schadstoffe aus den Prozeßgasen so vorgegangen werden, daß der dem Festbettreaktor rückgeführte Aktivkoks unterstöchiometrisch bei Temperaturen von 1500°C bis 1900°C vergast wird, wobei vorzugsweise ein Teilstrom der heißen Prozeßgase nach dem Austritt aus dem Thermoreaktor in die Brennerebene des Festbettreaktors rückgeführt wird. Die Prozeßgase verlassen den Festbettreaktor üblicherweise mit Temperaturen von über 1000°C bis 1200°C, so daß, wie eingangs erwähnt, die sichere Zersetzung der in den Prozeßgasen enthaltenen halogenierten organischen Substanzen gewährleistet wird. Insgesamt wird durch diese nachfolgende Erhitzung wiederum ein Temperaturniveau erreicht, welches unter zumindest teilweiser Ausnützung der fühlbaren Wärme nach Verlassen des Thermoreaktors in der Vorwärmzone des Festbettreaktors neuerlich ausgenützt werden kann.

Nach der weitestgehenden Zersetzung von halogenierten Kohlenwasserstoffen im Thermoreaktor erfolgt mit Vorteil eine rasche Abkühlung der Prozeßgase um die de novo Synthese von polychlorierten Dibenzodioxinen bzw. polychlorierten Dibenzofuranen zu verhindern. In einfacher Weise kann diese Abkühlung unter gleichzeitigen Wärmetausch für die Erzeugung von Fernwärme ausgenutzt werden und es wird daher im Rahmen des erfindungsgemäßen Verfahrens mit Vorteil so vorgegangen, daß das aus dem Thermoreaktor austretende Gas über Abhitzekessel auf Temperaturen von unter 250°C, insbesondere 230 bis 240°C, gekühlt wird, bevor es einer physikalischen oder physikalisch/chemischen Reinigung zugeführt wird, wobei bevorzugt so vorgegangen wird, daß die Abgase einer Chemiesorption zugeführt und in den Prozeß rückgeführt werden.

Dadurch, daß die Abgase des Festbettreaktors durch unterstöchiometrische Verbrennung von Brenngasen auf Temperaturen von 1000°C bis 1500°C vor dem Eintritt in den Thermoreaktor erhitzt werden, kann sichergestellt werden, daß in dem Abgasstrom enthaltene Dibenzodioxine bzw. Dibenzofurane mit Sicherheit thermisch zersetzt werden und durch die Abkühlung des aus dem Thermoreaktor austretenden Gases auf Temperaturen von unter 250° wird auch eine neuerliche Rekombination dieser hochgiftigen Substanzen mit Sicherheit vermieden. Um die Verbrennung in dem Festbettreaktor mit den für das Verfahren günstigsten Sauerstoffwerten durchführen zu können, wird mit Vorteil so vorgegangen, daß die Sauerstoffzufuhr in den Festbettreaktor in Abhängigkeit vom O₂-Gehalt des Abgases geregelt wird.

Um die Zufuhr der gesamten Abgasmenge aus dem Festbettreaktor in den Thermoreaktor zu gewährleisten, wird mit Vorteil das obere Ende des Festbettreaktors unter unteratmosphärischen Druck gehalten, und um eine quantitive Umsetzung der Abgasmenge sicherzustellen, wird mit Vorteil vor dem Eintritt in den Thermoreaktor über ein Abgasgebläse eine definierte Frischluftmenge angesaugt.

Zur vollständigen Entfernung der Schwefelreste aus dem Abgasstrom wird in vorteilhafter Weise das Aktivkoksfilter im Gegenstrom betrieben und als Wanderbettadsorber ausgebildet und es wird durch eine Injektorförderung oder Nachschaltung eines Abgasgebläses ein Unterdruck im Filter gehalten. Dadurch, daß das Aktivkohlefilter durch einen Injektorförderung unter Unterdruck gehalten wird, wird sowohl ein rascher Durchsatz des Abgasstromes durch das Aktivkoksfilter sichergestellt als auch der Austritt von schwefelhaltigen Abgasen in die Atmosphäre mit Sicherheit vermieden. Die Rückführung von Aktivkoks mit einer Körnung zwischen 50 und 200 µm in die Brennerebene dient hiebei der thermischen Nutzung an mit Schadstoffen belasteten Material, wobei durch die Verwendung des Thermoreaktors auch bei einer derartigen Rückführung von mit Schadstoffen belasteten Aktivkoks die Konzentration an Schadstoffen im Prozeßgas im wesentlichen konstant gehalten werden kann.

In vorteilhafter Weise gelingt dies dadurch, daß die Prozeßabgase in eine Wirbelkammer des Thermoreaktors tangential eingeblasen werden und anschließend in eine Mischzone mit Strömungsleiteinrichtungen, insbesondere Keramikprofilen, geleitet werden.

Weiters kann der Eisenabbrand durch Chargierung von Kohlenstoffträgern zur Minderung des Oxidationspotentials, sowie Kalk oder Dolomit zur Einstellung einer höheren Schlackeubasizität minimiert werden, wobei bevorzugt so vorgegangen wird, daß eine Chargierung von Zuschlägen, wie Kohlenstoffträgern, Kalk oder Dolomit, mit dem Schrott dosiert aufgegeben wird. Gemäß einer weiteren bevorzugten Ausführungsform wird so vorgegangen, daß aus einem nachgeschalteten Überhitzungs- und/oder Raffinationsaggregat austretende Reaktions- und Heißgase in die Vorwärmzone des Festbettreaktors oder in den Thermoreaktor eingebunden werden. Durch gezielte Zugabe von Zuschlägen wie Kalk, Dolomit oder Kohlenstoffträger in den Festbettreaktor und/oder durch direkte Zugabe in das Uberhitzungs-/Raffinationsaggregat kann der FeO-Gehalt und die Basizität der Fertigschlacke sowie der Schwefelgehalt in der Stahlschmelze eingeregelt werden.

Mit vorstehender Verfahrensweise kann gleichzeitig die notwendige chemisch/metallurgische Arbeit in dem nachgeschalteten Überhitzungs-/Raffinationsaggregat wesentlich verringert und somit der notwendige Energieeinsatz drastisch reduziert werden. Als nachgeschaltetes Überhitzungs-und/oder Raffinationsaggregat können E-Öfen, SM-Öfen, andere elektrischgas-, öl-, kohle- oder kombinationsbeheizte Aggregate Verwendung finden.

Gemäß einer bevorzugten Verfahrensweise wird zur Einstellung einer bestimmten Fertigschlackenbasizität so vorgegangen, daß die Zuschläge in den Festbettreaktor aufgegeben und in diesem vorgewärmt und aufgeschmolzen werden. In energetisch besonders günstiger Weise können die zur Reduktion des Eisenoxidgehaltes im nachgeschalteten Überhitzungs- oder Raffinationsaggregat eingesetzten Kohlenstoffträger bevorzugt so eingesetzt werden, daß die im nachgeschalteten Überhitzungs-/Raffinationsaggregat eingesetzten Kohlenstoffträger im Festbettreaktor auf über 1500°C vorgewärmt werden.

Die aus dem Überhitzungs-/Raffinationsaggregat mit über 1000°C austretenden Reaktions- und Heißgase können je nach Prozeßfahrweise und Bauart des Aggregates direkt in die Vorwärmzone des Festbettreaktors oder in den Thermoreaktor eingebunden werden kann.

Zur Verhinderung eines Gasaustritts aus der Chargieröffnung des Festbettreaktors wird bevorzugt so vorgegangen, daß in der Chargieröffnung des Festbettreaktors ein Sperrluft- oder Inertgasschleier eingeregelt wird. Zur Nutzung des Kohlenstoffgehaltes des Aktivkokses für die metallurgische Arbeit wird bevorzugt so vorgegangen, daß in einer Kornfraktion von 0,1 bis 6 mm aus dem Aktivkoksfilter ausgetragener Aktivkoks in die Schmelzzone bzw. Schmelze des Festbettreaktors eingeblasen wird, worauf in weiterer Folge die flüchtigen Bestandteile entgast und oxidiert werden.

Zur Erhöhung der Wertstoffkonzentration, wie Zink, Blei im Byprodukt Staub, etc., wird bei Bedarf der im Kessel oder Staubfilter abgeschiedene Staub einer Rezirkulation in die Schmelzzone unterzogen, wobei die Schwermetalle hohen Dampfdruckes vergast und die Schlackenbildner, wie Kalk, FeO, Aluminium, etc., aufgeschmolzen und in die Schlackenphase eingebunden werden. Bevorzugt wird dabei so vorgegangen, daß zur Regelung von Schwermetallgehalten in einem Kessel oder Staubfilter abgeschiedene Filterstäube im Teilstrom in die Schmelzzone eingeblasen werden. Der vergaste Schwermetallanteil wird in weiterer Folge in der Verfahrensstufe Abhitzekessel wiederum sublimiert und somit einer Aufkonzentration zugeführt. Durch diese Prozeßfahrweise können im Wertstoff Staub gezielte Zink- und andere Schwermetallkonzentrationen gesteuert werden.

Zur Verhinderung einer Rekombination der in den Abgasen enthaltenen Schadstoffe wird bevorzugt so vorgegegangen, daß durch rasche Abkühlung des aus dem Thermometer bzw. Abhitzekessel mit einem Temperaturniveau von größer 400°C austretende Abgas durch Quenchen schlagartig auf unter 250°C abgekühlt wird.

Zur Dissoziation bzw. Zerstörung der polychlorierten und polycyclischen aromatischen Kohlenwasserstoffverbindungen wird gemäß einer bevorzugten Verfahrensführung so vorgegangen, daß die Filterstäube in einer indirekt beheizten Mischschnecke unter Sauerstoffmangel bei 350°C bis 400°C ca. 30 bis 60 Minuten konditioniert werden.

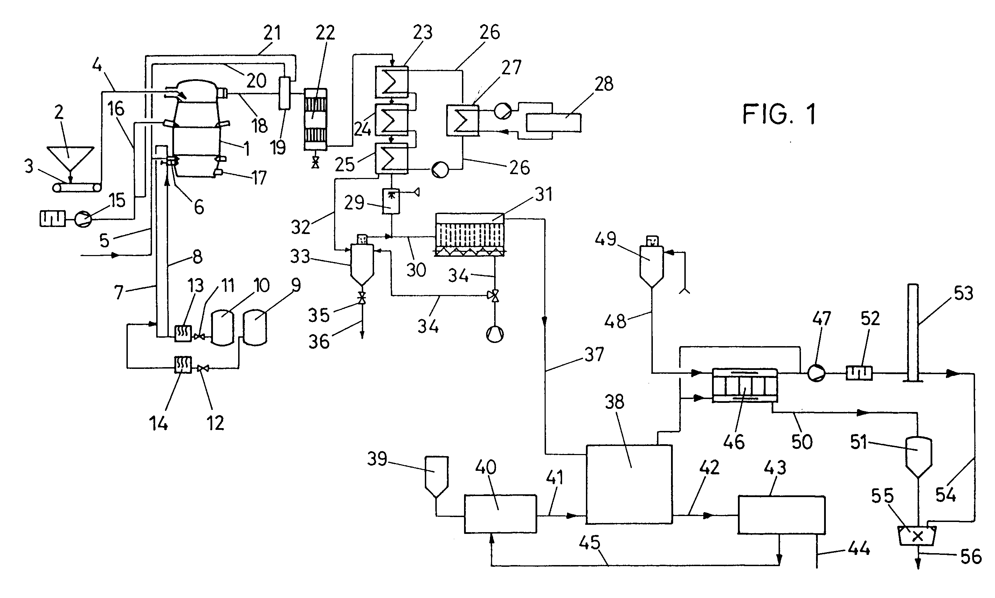

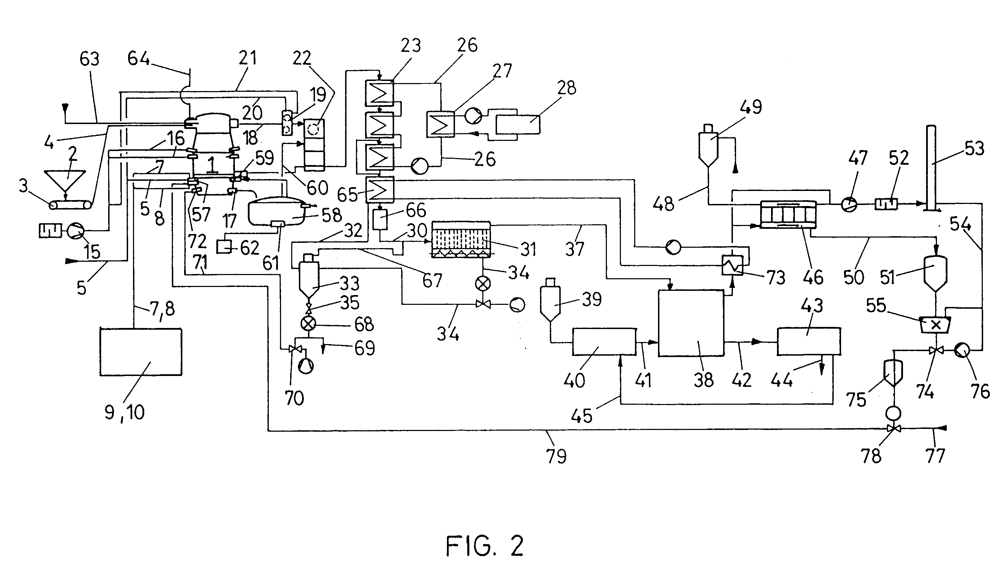

Die Erfindung wird nachfolgend an Hand von in der Zeichnung schematisch dargestellten Ausführungsbeispielen von zur Durchführung des Verfahrens geeigneten Anlagen näher erläutert: In dieser zeigen Fig. 1 eine erste Ausführungsform einer Anlage zur Durchführung des erfindungsgemäßen Verfahrens und Fig. 2 eine abgewandelte Ausführungsform einer Anlage.

In Fig.1 ist mit 1 ein Festbettreaktor bezeichnet, in welchen Schrott aus einem Schrottvorratsbehälter 2 über einen Förderer 3 und eine Zuführungsleitung 4 kontinuierlich eingebracht wird. Die für das Aufschmelzen des eingesetzten Schrottes erforderliche Prozeßwärme wird im unteren Bereich des Feststoffreaktors 1 durch Zufuhr von gasförmigen oder festen Brennstoffen über Leitung 5 zu schematisch angedeuteten Brennern 6 sichergestellt. Um in dem Festbettreaktor 1 die für die jeweilige Charge entsprechende Einstellung der Sauerstoffmenge für die Verbrennung sicherzustellen, sind zu dem Brenner 6 Stickstoff- bzw. Sauerstoffleitungen 7 und 8 geführt. Stickstoff und Sauerstoff werden hiebei vorzugsweise aus Tanks 9 und 10, in welcher die Gase flüssig vorliegen entnommen, und über Ventile 11 und 12 bzw. Kaltvergaser 13 und 14 in die entsprechenden Leitungen 7 und 8 eingebracht und in der erforderlichen Menge dem Brenner 6 zugeführt. Zur Einstellung der Verbrennungsstöchiometrie wird hiebei über ein schematisch angedeutetes Abzuggebläse 15 über Leitung 16 eine definierte Falschluftmenge in die Sekundärluftebene des Festbettreaktors 1 angesaugt. Die im Festbettreaktor erzeugte Stahlschmelze und auch die anfallende Schlacke werden über den Austrag 17 einem nicht gezeigten Überhitzungs-/Raffinationsaggregat zur weiteren Verarbeitung zugeführt.

Das bei der Verbrennung bzw. Vergasung von Schrott und/oder metallhaltigen, müllähnlichen Stoffen anfallende Abgas wird über Leitung 18 aus dem Festbettreaktor ausgetragen und bei Bedarf durch Verbrennung von Brenngasen in einer Hilfsbrennstufe 19 auf Temperaturen von 1000°C bis 1200°C erhitzt. Die für diese Nachverbrennung erforderlichen Brenngase werden über eine Zweigleitung 20 der Leitung 5 der Nachverbrennungsanlage 19 zugeführt und gegebenenfalls für die Nachverbrennung noch erforderlicher Sauerstoff wird über eine Zweigleitung 21 der Sekundärluftleitung 16 zugeführt. Die aus der Hilfsbrennstufe 19 austretenden auf Temperaturen bis zu 1300°C erhitzten Abgase werden in der Folge einem Thermoreaktor 22 zugeführt, in welchem die in dem Abgas enthaltenen, organischen Schadstoffe nahezu quantitativ zersetzt werden. Das aus dem Thermoreaktor austretende Gas wird über Abhitzekessel 23, 24 und 25 auf Temperaturen von unter 250°C abgekühlt, um die Rekombination von polyhalogenierten Dibenzodioxinen bzw. Dibenzofuranen zu verhindern. Die Abhitzekessel 23, 24 und 25 sind hiebei als Wärmetauscher ausgebildet, wobei in den Kühlkreislauf 26 ein weiterer Wärmetauscher 27 eingeschaltet ist, welcher beispielsweise als Wärmelieferant für einen schematisch angedeuteten Fernwärmeabnehmer bzw. eine Wärme-Kraft-Kupplung 28 herangezogen werden kann. Das aus dem letzten Wärmetauscher 25 austretende Abgas wird in der Folge zur weiteren Abkühlung über einen Gaswäscher 29 geleitet und gelangt in der Folge über Leitung 30 in ein Staubfilter 31. Die bereits in den Wärmetauschern 23, 24 und 25 niedergeschlagenen Staubanteile des Abgases können direkt über Leitung 32 einem Staubsilo 33 zugeführt werden. Die in dem Staubfilter 31 aus dem Abgas abgetrennten festen Partikel werden ebenso wie die bereits direkt in den Wärmetauschern abgeschiedenen Feststoffe dem Staubsilo 33 über Leitung 34 zugeführt. Die in dem Staubsilo 33 gesammelten Feststoffe können in der Folge über Ventil 35 und Leitung 36 aus diesem Silo 33 ausgetragen werden und einer nicht gezeigten Weiterverwertung zugeführt werden.

Die Abgase werden aus dem Staubfilter 31 über Leitung 37 ausgetragen und einer Rauchgasreinigungsanlage 38 zugeführt. In der Rauchgasreinigungsanlage 38 wird mittels einer alkalischen abwasserfreien Rauchgaswäsche eine Reinigung des Abgases vorgenommen. Hiezu wird Kalziumoxid aus einem Vorratsbehälter 39 einer Kalziumhydroxidaufbereitung 40 zugeführt, wo das Kalziumoxid durch Vermischen mit Wasser zu einer Kalklauge aufgeschlämmt wird. Die Kalklauge wird über Leitung 41 der Rauchgasreinigungsanlage 38 zugeführt, wo die Kalklauge mit dem SO₂/SO₃, HCl und/oder HF des Abgases zu Kalziumsulfat, -chlorid oder -fluorid reagiert. Die gebildete Aufschlämmung aus Kalziumsulfat, welche gegebenenfalls noch mit anderen in dem Rauchgas enthaltenen Schadstoffen verunreinigt ist, wird über Leitung 42 aus der Rauchgasreinigungsanlage 38 ausgetragen und einer Gipsaufbereitung 43 für eine nachfolgende Verhaldung zugeführt. In der Gipsaufbereitung werden die Reaktionsprodukte so weit aufkonzentriert, daß ein stichfester Rückstand gebildet wird, welcher aus der Gipsaufbereitung 43 über Leitung 44 ausgetragen und verhaldet werden kann. Aus der Gipsaufbereitung abgezogenes Wasser kann hiebei über Leitung 45 der Kalziumhydroxidaufbereitung rückgeführt werden. Die aus der Rauchgasreinigungsanlage 38 austretenden nunmehr von schwefelhaltigen Rückständen befreiten Abgase werden in der Folge einem Aktivkoksfilter 46 zugeführt. Das Aktivkoksfilter 46 ist hiebei als Wanderbettadsorber im Gegenstromprinzip ausgebildet, wobei die den Aktivkoksfilter 46 durchströmenden Abgase beidseitig des Filters mittels eines Saugzuges 47 abgezogen werden. Der Aktivkoksfilter wird hiebei kontinuierlich oder diskontinuierlich über ein Fördersystem über Leitung 48 mit Koks aus einem Aktivkoksreservoir 49 gespeist. Der mit Schadstoffen beladene Aktivkoks wird aus dem Aktivkoksfilter 46 über Leitung 50 ausgetragen und der Mühle 51 zugeführt, wo der Aktivkoks auf eine Größe von 50 bis 200µ vermahlen wird.

Die über den Saugzug 47 aus dem Aktivkoksfilter abgezogenen gereinigten Abgase werden nach Durchlauf eines Schalldämpfers 52 mittels eines Abluftkamines 53 in die Atmosphäre geleitet. Die am Fuß des Abluftkamines abfallenden Reste von Kohlenstaub werden in der Folge über Leitung 54 ebenso wie der gemahlene Aktivkoks einem Aktivkoksvorratsbehälter 55 zugeführt, von welchem der Aktivkoks über Leitung 56 dem Brenner 6 des Festbettreaktors zugeführt werden kann.

In Fig.2 ist eine abgewandelte Ausführungsform einer Anlage zum Erschmelzen von Stahl aus Schrott dargestellt, wobei im wesentlichen die in Fig. 1 vergebenen Bezugsziffern für gleiche Elemente in der Fig. 2 beibehalten wurden. Es wird hiebei wiederum Schrott aus einem Schrottvorratsbehälter 2 in einen Festbettreaktor 1 eingebracht, wobei die für das Aufschmelzen des eingesetzten Schrottes erforderliche Brenngase in den unteren Bereich des Reaktors 1 über die zuführung 57 eingebracht werden. Ebenfalls über das zuführungsventil 57 werden die für die Verbrennung des Schrottes erforderlichen Stützgase der Verbrennung, nämlich Sauerstoff und Stickstoff über Zuführungsleitungen 7, 8 aus entsprechenden Vorratsbehältern 9, 10, welche gegebenenfalls Bestandteil einer konventionellen Luftzerlegungsanlage sein können, zugeführt. In Fig. 2 wird die Verbrennungsstöchiometrie mittels des schematisch angedeuteten Abzugsgebläses 15 und Leitung 16 in die Sekundärluftebene(ebenen) des Festbettreaktors 1 sichergestellt. Die im Festbettreaktor erzeugte Stahlschmelze und die anfallende Schlacke werden über den Austritt 17 einem Überhitzungs-/Raffinationsaggregat 58 zugeführt und hier weiter behandelt. Die aus dem Überhitzungs-/Raffinationsaggregat 58 austretenden Abgase werden in der Folge sowohl dem Festbettreaktor 1 über Ventil 59 als auch dem Thermoreaktor 22 über Leitung 60 zur weiteren Verarbeitung bzw. zur Abtrennung der in den Abgasen enthaltenen Schadstoffen zugeführt.

Die Stahlschmelze wird aus dem Überhitzungs-/Raffinationsaggregat beim Austrag 61 abgezogen und in konventioneller Weise beispielsweise einer schematisch dargestellten Pfanne 62 zugeführt.

Das bei der Verbrennung bzw. der Vergasung von metallhaltigen, müllähnlichen Stoffen anfallende Abgas wird über Leitung 18 aus dem Reaktor 1 ausgetragen und einer Hilfsverbrennung 19 zugeführt. Um nun bei dieser Hilfsverbrennung 19 eine ausreichende Brennstoffmenge zur Verfügung zu haben, wird Brennstoff über Leitung 20 der Hilfsverbrennung 19 zugeführt. Die für die Nachverbrennung erforderliche Luftmenge wird einerseits durch die Zweigleitung 21 der Sekundärluftzuführung bestritten und andererseits durch Leitungen 63 und 64, welche am Kopf des Reaktors 1 münden und als Falschluftleitung bzw. Sperrluftleitung bezeichnet werden. Die aus der Hilfsverbrennung 19 austretenden Abgase werden in der Folge wiederum einem Thermoreaktor 22 zugeführt und die Abgase aus dem Thermoreaktor 22 können wie bereits in Fig. 1 beschrieben über Abhitzekessel geleitet werden und in diesen weiter abgekühlt werden. Die Abhitzekessel sind hier wiederum als Wärmetauscher ausgebildet und können mit einem weiteren Wärmetauscher 27 kombiniert sein, welcher als Wärmelieferant für einen schematisch angedeuteten Fernwärmeabnehmer herangezogen werden kann. Zur weiteren Abkühlung der Abgase werden sie in der Folge über einen weiteren Wärmetauscher 65 geleitet und in der Folge in einer als Quencher ausgebildeten Abschreckeinheit 66 auf die für die weitere Behandlung in dem Staubfilter erforderliche Temperatur abgekühlt.

Die in den Wärmetauschern 23, 24, 25 und 65 niedergeschlagenen Abgase können hiebei auch direkt über Leitung 32 dem Staubsilo 33 zugeführt werden, wobei am Kopf des Staubsilos 33 auch eine Rückführungsleitung 67 für gegebenenfalls nicht niederschlagbare Staubanteile vorgesehen ist, welche diese Staubanteile wiederum in den Kreislauf vor dem Staubsilo 31 einspeist. Die in dem Staubsilo 33 abgeschiedenen Feststoffe können in der Folge über Ventil 35 und einen Verteiler 68 entweder direkt über Leitung 69 ausgetragen werden oder aber über ein weiteres Ventil 70 und Leitung 71 am Boden des Festbettreaktors bei 72 zur vollständigen Verbrennung neuerlich in den Festbettreaktor 1 eingespeist werden.

Die Abgase werden in der Folge aus dem Staubfilter 31 einer Rauchgasreinigungsanlage 38 zugeführt, wo mittels einer alkalischen, abwasserfreien Rauchgaswäsche eine Reinigung des Abgases vorgenommen wird. In der Rauchgasreinigungsanlage 38 wird eine alkalische Rauchgaswäsche vorgenommen, für welche Kalziumoxid aus einem Vorratsbehälter 39 entnommen und einer Kalziumhydroxidaufbereitung 40 zugeführt wird. In der Kalziumhydroxidaufbereitung wird das Kalziumoxid durch Vermischen mit Wasser aufgeschlämmt und die entstehende Kalklauge 41 der Rauchgasreinigungsanlage zugeführt. Die gebildete Aufschlämmung aus Kalziumsulfat, welche gegebenenfalls noch mit anderen in dem Rauchgas enthaltenen Schadstoffen verunreinigt ist, wird über Leitung 42 einer Gipsaufbereitung 43 zugeführt, wobei aus der Gipsaufbereitung über Leitung 44 Gips ausgetragen und verhaldet werden kann. Das aus der Gipsaufbereitung abgezogene Wasser wird hiebei über Leitung 45 neuerlich der Kalziumhydroxidaufbereitung 40 rückgeführt.

Die aus der Rauchgasreinigungsanlage austretenden schwefelfreien Abgase werden in der Folge noch über einen Wärmetauscher 73, welcher mit dem Wärmetauscher 65 einen Kühlkreislauf bildet, geleitet und dann einem Aktivkoksfilter 46 zugeführt. Das Aktivkoksfilter ist als Wanderbettadsorber im Gegenstromprinzip ausgebildet, wobei die das Filter durchströmenden Abgase beidseitig des Filters mittels eines Saugzuges 47 abgezogen werden. Das Filter wird diskontinuierlich oder kontinuierlich über Leitung 48 aus einem Koksvorratsbunker 49 beschickt und die mit Schadstoffen beladene Aktivkohle wird aus dem Filter 46 über Leitung 50 einer Mühle 51 zugeführt, wo der Aktivkoks auf eine Größe von 50 bis 200µ vermahlen wird. Der gemahlene Aktivkoks wird über einen Zwischenbehälter 45, Leitung 56, Ventil 74 einem Vorratsbunker 75 zugeführt.

Die aus dem Aktivkoksfilter austretenden Abgase werden in der Folge über den Saugzug 47, den Schalldämpfer 52 in einen Abluftkamin 53 eingebracht und in die Atmosphäre abgelassen. Die im Fuß des Abluftkamins 53 anfallenden rußartigen Feststoffe werden über Leitung 54 ebenfalls entweder direkt im Zwischenbehälter 55 der Aktivkoksaufbereitung zugeführt oder aber über ein Gebläse 76 und Ventil 74 direkt in den Aktivkoksbunker 75 abgezogen. Der im Aktivkoksbunker 75 gesammelte verbrauchte Aktivkoks wird nach Vermischen von über Leitung 77 eingebrachte Luft bzw. Stickstoff und nach Durchtritt des Ventils 78 über Leitung 79 der Zuleitungsdüse 57 des Festbettreaktors 1 rückgeführt, und zur Energielieferung herangezogen.

## Patentansprüche

1. Verfahren zum Erschmelzen von Stahl aus Schrott und/oder metallhaltigen, müllähnlichen Stoffen, wobei die kontinuierlich oder diskontinuierlich eingetragenen Metallträger in einem Festbett (1) vorgewärmt und aufgeschmolzen werden sowie sauerstoffhältige Gase über wenigstens eine Sekundärdüsenebene im Bereich des Festbettes und/oder oberhalb des Festbettes eingedüst werden, dadurch gekennzeichnet, daß das Abgas des Festbettreaktors (1) einem Thermoreaktor (22), in welchem die in dem Abgas enthaltenen organischen Schadstoffe zersetzt werden, zugeführt wird und vor Eintritt in den Thermoreaktor (22) auf Temperaturen von 1000°C bis 1500°C erhitzt wird, und daß das den Thermoreaktor (22) verlassende Abgas über wenigstens ein Filter (31) geleitet wird und einer chemischen Rauchgasreinigung (38) unterworfen wird, worauf das behandelte bzw. physikalisch oder chemisch vorgereinigte Rauchgas gegebenenfalls über ein Aktivkoksfilter (46) endgereinigt wird.

2. Verfahren nach Anspruch 1, dadurch gekennzeichnet, daß das Abgas des Festbettreaktors (1) auf Temperaturen von 1000°C bis 1200°C erhitzt wird.

3. Verfahren nach Anspruch 1 oder 2, dadurch gekennzeichnet, daß der Aktivkoks des Aktivkoksfilters (46) ausgetragen und auf eine Korngröße von 50 bis 200µm, insbesondere 100 bis 150µm, gemahlen wird und in den Festbettreaktor (1) eingedüst wird.

4. Verfahren nach Anspruch 1, 2 oder 3, dadurch gekennzeichnet, daß der dem Festbettreaktor (1) rückgeführte Aktivkoks unterstöchiometrisch bei Temperaturen von 1500°C bis 1900°C vergast wird.

5. Verfahren nach einem der Ansprüche 1 bis 4, dadurch gekennzeichnet, daß ein Teilstrom der heißen Prozeßgase nach dem Austritt aus dem Thermoreaktor (22) in die Brennerebene des Festbettreaktors (1) rückgeführt wird.

6. Verfahren nach einem der Ansprüche 1 bis 5, dadurch gekennzeichnet, daß das aus dem Thermoreaktor (22) austretende Gas über Abhitzekessel (23,24,25) auf Temperaturen von unter 250°C, insbesondere 230 bis 240°C, gekühlt wird, bevor es einer physikalischen oder physikalisch/chemischen Reinigung zugeführt wird.

7. Verfahren nach einem der Ansprüche 1 bis 6, dadurch gekennzeichnet, daß die Abgase des Festbettreaktors (1) durch unterstöchiometrische Verbrennung (19) von Brenngasen vor dem Eintritt in den Thermoreaktor (22) erhitzt werden.

8. Verfahren nach einem der Ansprüche 1 bis 7, dadurch gekennzeichnet, daß die Sauerstoffzufuhr in den Festbettreaktor (1) in Abhängigkeit vom 0₂-Gehalt des Abgases geregelt wird.

9. Verfahren nach einem der Ansprüche 1 bis 8, dadurch gekennzeichnet, daß das obere Ende des Festbettreaktors (1) unter unteratmosphärischem Druck gehalten wird und über ein Abgasgebläse (15) eine definierte Falschluftmenge angesaugt wird.

10. Verfahren nach einem der Ansprüche 1 bis 9, dadurch gekennzeichnet, daß das Aktivkoksfilter (46) im Gegenstrom betrieben wird und als Wanderbettadsorber ausgebildet ist und daß durch eine Injektorförderung oder Nachschaltung eines Abgasgebläses (47) ein Unterdruck im Filter gehalten wird.

11. Verfahren nach einem der Ansprüche 1 bis 10, dadurch gekennzeichnet, daß die Prozeßabgase in eine Wirbelkammer des Thermoreaktors (22) tangential eingeblasen werden und anschließend in eine Mischzone mit Strömungsleiteinrichtungen, insbesondere Keramikprofilen, geleitet werden.

12. Verfahren nach einem Ansprüche 1 bis 11, dadurch gekennzeichnet, daß eine Chargierung von Zuschlägen, wie Kohlenstoffträger, Kalk oder Dolomit, mit dem Schrott dosiert aufgegeben wird.

13. Verfahren nach einem der Ansprüche 1 bis 12, dadurch gekennzeichnet, daß aus einem nachgeschalteten Übernitzungs- und/oder Raffinationsaggregat (8) austretende Reaktions- und Heißgase in die Vorwärmzone des Festbettreaktors (1) oder in den Thermoreaktor (22) eingebunden werden.

14. Verfahren nach einem der Ansprüche 1 bis 13, dadurch gekennzeichnet, daß Zuschläge in den Festbettreaktor (1) aufgegeben und in diesem vorgewärmt und aufgeschmolzen werden.

15. Verfahren nach einem der Ansprüche 1 bis 14, dadurch gekennzeichnet, daß die im nachgeschalteten Überhitzungs/Raffinationsaggregat (58) eingesetzten Kohlenstoffträger im Festbettreaktor (1) auf über 1500°C vorgewärmt werden.

16. Verfahren nach einem der Ansprüche 1 bis 15, dadurch gekennzeichnet, daß in der Chargieröffnung des Festbettreaktors (1) ein Sperrluft- oder Inertgasschleier eingeregelt wird.

17. Verfahren nach einem der Ansprüche 1 bis 16, dadurch gekennzeichnet, daß in einer Kornfraktion von 0,1 bis 6 mm aus dem Aktivkoksfilter (16) ausgetragener Aktivkoks in die Schmelzzone bzw. die Schmelze des Festbettreaktors (1) eingeblasen wird.

18. Verfahren nach einem der Ansprüche 1 bis 17, dadurch gekennzeichnet, daß zur Regelung von Schwermetallgehalten in einem Kessel oder Staubfilter (31) abgeschiedene Filterstäube im Teilstrom in die Schmelzzone eingeblasen werden.

19. Verfahren nach einem der Ansprüche 1 bis 18, dadurch gekennzeichnet, daß durch rasche Abkühlung des aus dem Thermoreaktor (22) bzw. Abhitzekessel (23,24,25) mit einem Temperaturniveau von größer 400°C austretende Abgas durch Quenchen schlagartig auf unter 250°C abgekühlt wird.

20. Verfahren nach einem der Ansprüche 1 bis 19, dadurch gekennzeichnet, daß die Filterstäube in einer indirekt beheizten Mischschnecke unter Sauerstoffmangel bei 350°C bis 400°C ca. 30 bis 60 Minuten konditioniert werden.

21. Verfahren nach einem der Ansprüche 1 bis 20, dadurch gekennzeichnet, daß die Abgase einer Chemiesorption zugeführt und in den Prozeß rückgeführt werden.

## Claims

1. Process for melting steel from scrap and/or waste material containing metal, the metal carriers introduced continuously or intermittently being pre-heated and melted in a fixed bed (1) and gases containing oxygen injected via at least one secondary nozzle level in the area of the fixed bed and/or above the fixed bed, characterised in that the waste gas of the fixed bed reactor (1) is fed to a thermal reactor (22), in which the organic pollutants present in the waste gas are decomposed, and is heated to temperatures of 1000°C to 1500°C before entry into the thermal reactor (22), and that the waste gas leaving the thermal reactor (22) is led via at least one filter (31) and is subjected to chemical flue gas cleaning (38), the treated and physically or chemically pre-cleaned flue gas then being finally cleaned via an activated coke filter (46) if necessary.

2. Process according to claim 1, characterised in that the waste gas of the fixed bed reactor (1) is heated to temperatures of 1000°C to 1200°C.

3. Process according to claim 1 or 2, characterised in that the activated coke of the activated coke filter (46) is discharged and ground to a particle size of 50 to 200 µm, in particular 100 to 150 µm, and injected into the fixed bed reactor (1).

4. Process according to claim 1, 2 or 3, characterised in that the activated coke returned to the fixed bed reactor (1) is gasified substoichiometrically at temperatures of 1500°C to 1900°C.

5. Process according to one of claims 1 to 4, characterised in that a partial flow of the hot process gases is returned to the burner level of the fixed bed reactor (1) after discharge from the thermal reactor (22).

6. Process according to one of claims 1 to 5, characterised in that the gas discharged from the thermal reactor (22) is cooled via waste heat boilers (23, 24, 25) to temperatures below 250°C, in particular 230 to 240°C, before it is fed to physical or physico/chemical cleaning.

7. Process according to one of claims 1 to 6, characterised in that the waste gases of the fixed bed reactor (1) are heated by substoichiometric combustion (19) of fuel gases before entry into the thermal reactor (22).

8. Process according to one of claims 1 to 7, characterised in that the oxygen supply to the fixed bed reactor (1) is controlled as a function of the O₂ content of the waste gas.

9. Process according to one of claims 1 to 8, characterised in that the upper end of the fixed bed reactor (1) is kept under subatmospheric pressure and a defined quantity of infiltrated air is drawn in via a waste gas fan (15).

10. Process according to one of claims 1 to 9, characterised in that the activated coke filter (46) is operated in the counterflow and designed as a moving bed adsorber and that a vacuum is maintained in the filter by an injector delivery or connection of a waste gas fan (47) on the outlet side.

11. Process according to one of claims 1 to 10, characterised in that the process waste gases are blown tangentially into a turbulence chamber of the thermal reactor (22) and subsequently fed into a mixing zone with flow guides, in particular ceramic-sections.

12. Process according to one of claims 1 to 11, characterised in that admixtures such as carbon carriers, lime or dolomite are charged in metered quantities with the scrap.

13. Process according to one of claims 1 to 12, characterised in that reaction and hot gases discharged from a superheating and/or refining unit (8) on the outlet side are supplied to the preheating zone of the fixed bed reactor (1) or the thermal reactor (22).

14. Process according to one of claims 1 to 13, characterised in that admixtures are fed into the fixed bed reactor (1) and preheated and melted in the latter.

15. Process according to one of claims 1 to 14, characterised in that the carbon carriers used in the superheating/refining unit (58) on the outlet side are preheated to over 1500°C in the fixed bed reactor (1).

16. Process according to one of claims 1 to 15, characterised in that a sealing air or inert gas curtain is adjusted in the charging opening of the fixed bed reactor (1).

17. Process according to one of claims 1 to 16, characterised in that activated coke discharged in a particle fraction of 0.1 to 6 mm from the activated coke filter (16) is blown into the melting zone or the melt of the fixed bed reactor (1).

18. Process according to one of claims 1 to 17, characterised in that deposited filter dusts in the partial flow are blown into the melting zone for the control of heavy metal contents in a boiler or dust filter (31).

19. Process according to one of claims 1 to 18, characterised in that the waste gas discharged from the thermal reactor (22) or waste heat boilers (23, 24, 25) with a temperature greater than 400°C is abruptly cooled to below 250°C by quenching.

20. Process according to one of claims 1 to 19, characterised in that the filter dusts are treated in an indirectly heated mixing screw at 350°C to 400°C with oxygen deficiency for about 30 to 60 minutes.

21. Process according to one of claims 1 to 20, characterised in that the waste gases are fed to chemisorption and are returned to the process.

## Revendications

1. Procédé pour l'élaboration d'acier à partir de ferrailles et/ou d'ordures métallifères, dans lequel les porteurs de métaux, introduits de façon continue ou discontinue, sont préchauffés et fondus dans un lit fixe (1) et des gaz contenant de l'oxygène sont injectés sur au moins un niveau de buse secondaire dans la zone du lit fixe et/ou au-dessus du lit fixe, caractérisé en ce que le gaz d'échappement du réacteur du lit fixe (1) est amené à un thermoréacteur (22), dans lequel les substances nocives organiques contenues dans le gaz d'échappement sont décomposées, et est chauffé à des températures allant de 1 000°C à 1 500°C avant l'entrée dans le thermoréacteur (22), et en ce que le gaz d'échappement sortant du thermoréacteur est dirigé sur au moins un filtre (31) et est soumis à une purification chimique de gaz de fumée (38), le gaz de fumée traité ou prépurifié de façon physique ou chimique subissant, le cas échéant, une purification finale par un filtre à coke actif (46).

2. Procédé selon la revendication 1, caractérisé en ce que le gaz d'échappement du réacteur du lit fixe (1) est chauffé à des températures allant de 1 000°C jusqu'à 1 200°C.

3. Procédé selon la revendication 1 ou 2, caractérisé en ce que le coke actif du filtre à coke actif (46) est évacué et est broyé jusqu'à obtention d'une grosseur de grain allant de 50 à 200 µm, surtout de 100 à 150 µm, et est injecté dans le réacteur de lit fixe (1).

4. Procédé selon la revendication 1, 2 ou 3, caractérisé en ce que le coke actif ramené vers le réacteur de lit fixe (1) est gazéifié de manière sous-stoechiométrique à des températures allant de 1 500°C à 1 900°C.

5. Procédé selon l'une des revendications 1 à 4, caractérisé en ce qu'un courant partiel des gaz de processus chauds est ramené au niveau du brûleur du réacteur du lit fixe (1) après la sortie du thermoréacteur (22).

6. Procédé selon l'une des revendications 1 à 5, caractérisé en ce que le gaz sortant du thermoréacteur (22) est refroidi par des chaudières de récupération (23, 24, 25) à des températures inférieures à 250°C, surtout de 230° à 240°C, avant d'être amené à une purification physique ou physique/chimique.

7. Procédé selon l'une des revendications 1 à 6, caractérisé en ce que les gaz d'échappement du réacteur du lit fixe (1) sont chauffés par combustion (19) sous-stoechiométrique de gaz de combustion avant l'entrée dans le thermoréacteur (22).

8. Procédé selon l'une des revendications 1 à 7, caractérisé en ce que l'arrivée d'oxygène dans le réacteur du lit fixe (1) est réglée en fonction de la teneur en O₂ du gaz d'échappement .

9. Procédé selon l'une des revendications 1 à 8, caractérisé en ce que l'extrémité supérieure du réacteur du lit fixe (1) est maintenue sous pression sous-atmosphérique et qu'une quantitée définie d'air parasite est aspirée au moyen d'une soufflante de gaz d'échappement (15).

10. Procédé selon l'une des revendications 1 à 9, caractérisé en ce que le filtre à coke actif (46) fonctionne à contre-courant et est conçu comme un absorbant à lit mobile, et en ce qu'une dépression est maintenue dans le filtre par un injecteur ou par l'agencement en aval d'une soufflante de gaz d'échappement (47).

11. Procédé selon l'une des revendications 1 à 10, caractérisé en ce que les gaz de processus sont insufflés de façon tangentielle dans une chambre de tourbillonNement du thermoréacteur (22) et sont conduits ensuite dans une zone de mixage munie de dispositifs de conduction de courant, en particulier de profilés céramiques.

12. Procédé selon l'une des revendications 1 à 11, caractérisé en ce qu'un chargement d'agrégats tels que des supports en carbone, de la chaux ou de la dolomite est chargé de façon dosée avec la ferraille.

13. Procédé selon l'une des revendications 1 à 12, caractérisé en ce que des gaz de réaction et des gaz chauds sortant d'un appareil de surchauffe et/ou de raffinage (8) placé en aval sont intégrés dans la zone de préchauffage du réacteur du lit fixe (1) ou dans le thermoréacteur (22).

14. Procédé selon l'une des revendications 1 à 13, caractérisé en ce que des agrégats sont chargés dans le réacteur du lit fixe (1) et sont préchauffés et fondus dans celui-ci.

15. Procédé selon l'une des revendications 1 à 14, caractérisé en ce que les supports en carbone introduits dans un appareil de surchauffe/de raffinage placé en aval (58) sont préchauffés à plus de 1 500°C dans le réacteur du lit fixe (1).

16. Procédé selon l'une des revendications 1 à 15, caractérisé en ce qu'un voile d'air ou de gaz inerte de fermeture est réglé dans l'ouverture de chargement du réacteur du lit fixe.

17. Procédé selon l'une des revendications 1 à 16, caractérisé en ce que dans une fraction granulométrique de 0,1 à 6 mm, du coke actif évacué du filtre à coke actif (16) est insufflé dans la zone de fusion ou dans la matière en fusion du réacteur du lit fixe (1).

18. Procédé selon l'une des revendications 1 à 17, caractérisé en ce que pour la régulation des teneurs en métal lourd, des poussières de filtre extraites dans une chaudière ou dans un filtre antipoussière (31) sont insufflées dans la zone de fusion en courant partiel.

19. Procédé selon l'une des revendications 1 à 18, caractérisé en ce que par refroidissement rapide du gaz d'échappement, ayant un niveau de température supérieur à 400°C, évacué du thermoréacteur (22) ou de chaudières de récupération (23, 24, 25) , ce gaz est refroidi d'un seul coup par injection jusqu'à une température inférieure à 250°C.

20. Procédé selon l'une des revendications 1 à 19, caractérisé en ce que les poussières de filtre sont conditionnées dans une vis mélangeuse chauffée indirectement sous insuffisance d'oxygène, à 350°C à 400°C et pendant environ 30 à 60 minutes .

21. Procédé selon l'une des revendications 1 à 20, caractérisé en ce que les gaz d'échappement sont amenés à une sorption chimique et ramenés dans le processus.
